# EUROPÄISCHE PATENTANMELDUNG

(11) **EP 2 960 276 A1**
(43) Veröffentlichungstag der Anmeldung: **30.12.2015**
(21) Anmeldenummer: 14173807.0
(22) Anmeldetag: 25.06.2014
(51) Int. Cl.: C08K 3/00, C09D 5/18

(54) **Brandschutz-Zusammensetzung und deren Verwendung**

(71) Anmelder: HILTI Aktiengesellschaft, 9494 Schaan (LI)
(72) Erfinder: Simon, Sebastian, 86807 Buchloe Lindenberg (DE); Thiemann, Frank, 86899 Landsberg/Lech (DE)
(74) Vertreter: Hilti Aktiengesellschaft Corporate Intellectual Property

(57) **Zusammenfassung**

Es wird eine Zusammensetzung beschrieben, die ein Bindemittel auf Basis einer Verbindung mit elektronenarmen Kohlenstoffmehrfachbindungen und einer Carbanionen-bildenden Verbindung enthält. Durch die erfindungsgemäße Zusammensetzung, deren Expansionsrate relativ hoch ist, können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine gut Brandschutzwirkung erreicht werden kann. Die erfindungsgemäße Zusammensetzung eignet sich besonders für den Brandschutz, insbesondere als Beschichtung von Kabeln und Kabeltrassen zur Erhöhung der Feuerwiderstandsdauer.

## Beschreibung

Die vorliegende Erfindung betrifft eine Zusammensetzung, insbesondere eine ablativ wirkende Zusammensetzung, die ein Bindemittel auf Basis einer Verbindung mit elektronenarmen Kohlenstoffmehrfachbindungen und einer Carbanionen-bildenden Verbindung enthält, sowie deren Verwendung für den Brandschutz, insbesondere für die Beschichtung von Bauteilen, wie Stützen, Trägern, Fachwerkstäben, Dämmsystemen, z.B. Weichschotts, Kabel, Kabelbündeln zur Erhöhung der Feuerwiderstandsdauer.

Bei Bränden bilden Kabeltrassen aus mehreren Gründen besondere Gefahrenstellen. Zum einen tritt bei Bränden von mit Kunststoff isolierten Kabeln eine intensive Rauchentwicklung unter Emission schädlicher, z.T. giftiger Stoffe auf. Zum anderen kann sich entlang von Kabeltrassen ein Brand schnell ausbreiten und der Brand unter Umständen an eine vom ursprünglichen Brandherd weit entfernte Stelle gleitet werden. Bei Kabelanlagen besteht ferner das Problem, dass bei diesen Kabeln durch thermische Einwirkung oder Abbrand die Wirkung der Isolation nachlässt und durch Kurzschluss eine Unterbrechung des Stromflusses auftreten kann und damit die Kabel zerstört, bzw. funktionsuntüchtig werden.

Elektrische Kabel und Leitungen werden häufig in Fluren verlegt und von dort in die angrenzenden Räume unterteilt. Diese Flure dienen im Brandfall als Flucht- und Rettungswege, die bei Bränden von Kabelinstallationen durch Rauchentwicklung und toxische Brandgase unbenutzbar werden, wobei z. B. brennendes PVC stark korrosive Gase freisetzt. Kabelmassierungen stellen somit insbesondere im Industriebau, in Kraftwerksanlagen, in Krankenhäusern, Groß- und Verwaltungsbauten und generell in Gebäuden- mit hoher Installationsdichte ein erhebliches Gefahrenpotential dar. Die Kabelisolierungen sind in diesen Gebäuden oft die maßgebliche Brandlast und verursachen lang andauernde Brände mit Brandraumtemperaturen in ungünstigsten Fällen bis über 1000°C. Aus den genannten Gründen ist Kabeltrassen in Bezug auf Brandschutzmaßnahmen besondere Beachtung zu schenken.

Um diese Gefährdungen der fehlenden Funktionsfähigkeit der Kabel und der starken Brandlasterhöhung durch die Kabel zumindest zeitlich begrenzt zu verhindern, ist es bekannt, die Kabel durch unbrennbare Baustoffe der Baustoffklasse A1 oder A2 räumlich zu trennen, in dem die Kabel z.B. in Installations- und/oder Funktionserhaltkanälen verlegt werden. Dieses erfordert jedoch einen hohen Arbeitsaufwand. Zusätzlich entsteht ein hoher Raumbedarf durch aufwändige Konstruktionen, die zusätzlich zum Gewicht der Kabeltrasse noch das Gewicht der Installations- und/oder Funktionserhaltkanäle berücksichtigen müssen. Dazu werden häufig Kabel und Kabeltrassen mit isolierenden Materialien umwickelt, wie Aluminiumoxid-Silika-Matten oder Mineralwollmatten. Um einen ausreichenden Brandschutz zu erreichen, muss das Material sehr dick sein. Dies führt jedoch zu Problemen hinsichtlich der Abstände zwischen dem geschützten Gegenstand und benachbarten oder überlagerten Gegenständen. Darüber hinaus verursachen diese Materialien aufgrund ihrer thermischen Isoliereigenschaften Probleme bei Normalbetrieb. Eines dieser Probleme wird als "Herabsetzung der Strombelastbarkeit" bezeichnet. Dies bedeutet, dass die durch elektrische Kabel in dem Kabelrohr oder der Kabeltrasse erzeugte Wärme im Bereich der Isolierung nicht mehr abgeführt werden kann, was dazu führt, dass der in diesen Kabeln zulässige sichere Strombetriebspegel verringert wird oder dass eine Überhitzung der Kabel erfolgt. Diese Nachteile machen diese Art des Brandschutzes sehr unflexibel hinsichtlich deren Einsatzbereichs.

Zur Vermeidung dieser Nachteile ist es auch bekannt, für den Schutz elektrischer Kabel Beschichtungen aufzubringen, die im Brandfall unter thermischer Einwirkung intumeszieren, d.h. aufschäumen und so eine Dämmschicht bilden oder die durch physikalische und chemische Prozesse Wärme aufnehmen und so kühlend wirken.

Mit dämmschichtbildenden Beschichtungen ist es möglich, die Teilnahme von Kabeln am Brandgeschehen für 30 Minuten oder länger zu verhindern. Derartige beschichtete Kabel werden oft auf Kabeltrassen verlegt. Hierbei hat es sich jedoch gezeigt, dass bei vertikaler oder geneigter Anordnung der Kabeltrassen auch ein vollständig aufgeschäumter Dämmschichtbildner die Brandausbreitung ohne zusätzliche Maßnahmen nicht verhindern kann. Während der Erwärmung verformen sich die Kabel zwischen den Kabelschellen so stark, dass die Dämmschicht bildende Beschichtung aufreißt und teilweise abplatzt. Entstehender Schaum löst sich dabei ebenfalls von den Kabeln und fällt ab. Bei nach Verlegung der Kabel erfolgter Beschichtung sind die Kabel im Bereich der Schellenkonstruktionen nicht in vollem Umfang zugänglich. Dies hat zur Folge, dass bei vertikaler oder geneigter Anordnung der Kabeltrassen im Brandfall im Bereich der Schellenkonstruktionen nur ein Schaum geringer Dicke entsteht, der als Brandschutz für 30 Minuten nicht mehr ausreicht. Bei Verlegung von PVC-Kabeln treten daher wieder die im Brandfall bekannten Probleme auf.

Es ist auch bekannt, flammwidrig bzw. schwer entflammbar ausgerüstete halogenfreie Kabel zu verwenden, die nur schwer entflammbar und raucharm sind und nur eine geringe Brandweiterleitung besitzen. Diese Kabel sind jedoch sehr teuer und kommen daher nur unter extrem gefährdeten Bedingungen zum Einsatz.

Zur Vermeidung der Nachteile dämmschichtbildender Beschichtungen wurden bei Kabeltrassen Materialen auf die Kabel und Kabelhalterungen aufgebracht, die einen Ablationseffekt zeigen, d.h. unter Hitzeeinwirkung kühlend wirken und keramisieren, wie beispielsweise in der DE 196 49 749 A1 beschrieben. Hierin wird ein Verfahren zur Ausbildung eines Brandschutzes für brennbare oder hitzegefährdete Bauteile beschrieben, wobei die Bauteile mit einer Beschichtung versehen werden, die als Bindemittel ein anorganisches Material aus feingemahlenen hydraulischen Bindemitteln wie Calcium-Silicat, -Aluminat oder -Ferrit enthält, dem Ablativstoffe wie Aluminium- oder MagnesiumHydroxid zugesetzt ist. Nachteil an dieser Maßnahme ist, dass einerseits das Aufbringen des den Ablationseffekt zeigenden Materials zeitintensiv ist und andererseits die Haftung des Materials an den Kabeln und den Kabelhalterungen ein Problem darstellt.

Andere derzeit auf dem Markt befindlichen Beschichtungssysteme, welche einige der oben erwähnten Nachteile nicht aufweisen sind einkomponentige Beschichtungszusammensetzungen auf der Basis von Polymerdispersionen, die sich endotherm zersetzende Verbindungen enthalten. Nachteilig an diesen Beschichtungen ist zum einen die relativ lange Trocknungsdauer der Beschichtung und damit einhergehende geringe Trockenschichtdicke, da diese Systeme physikalisch, d.h. durch Verdunstung des Lösungsmittels trocknen. Daher sind für dickere Beschichtungen mehrere nacheinander folgende Auftragungen erforderlich, was diese Systeme ebenfalls zeit- und arbeitsintensiv und daher unwirtschaftlich macht.

Der Erfindung liegt daher die Aufgabe zugrunde, ein ablativ wirkendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund des erreichbaren hohen Füllgrades nur eine geringe Schichtdicke erfordert.

Nachteilig an den bekannten Systemen ist außerdem, dass die Reaktivität der Bindemittelkomponenten die Verarbeitungszeit der Zusammensetzungen bestimmt. Ferner werden weitere Anforderungen an Beschichtungssysteme gestellt, wie die zeitliche Beeinflussung der Aushärtung (Aushärtungsprofil), ohne jedoch die Aushärtung an sich, d.h. die Reaktivität der Bindemittelkomponenten negativ zu beeinflussen, oder die Beeinflussung der Beschaffenheit der Oberfläche der ausgehärteten Beschichtung, die mit den bekannten Zusammensetzung nicht erreicht werden können. Diese Anforderungen stehen sich jedoch in gewisser Weise entgegen. Für eine schnelle Aushärtung, aber auch um die Robustheit gegenüber sauren Verunreinigungen zu erreichen, sind reaktive Bindemittelkomponenten und/oder hohe Konzentrationen an Katalysatoren erforderlich. Wohingegen hohe Konzentrationen an Katalysatoren die Oberflächenbeschaffenheit und die Härte der Beschichtung negativ beeinflussen können. Aus der WO 2013/050623 A1 ist ein Michael-Additions-System bekannt, das eben einem Michael-Donor und einem Michal-Akzeptor einen weiteren Michael-Donor, dessen Reaktivität sich von der des eigentlichen Michael-Donors unterscheidet, als Inhibitor zur Einstellung des Reaktivitätsprofils des Michael-Additions-Systems enthält.

Dieses System hat allerdings keine Brandschutzeigenschaften, so dass es nicht als Brandschutzbeschichtung verwendet werden kann.

Eine weitere Aufgabe der Erfindung ist daher, ein ablativ wirkendes Beschichtungssystem der eingangs erwähnten Art zu schaffen, dessen Reaktivität einstellbar ist, so dass eine Offenzeit einstellbar wird und das Beschichtungssystem an verschiedene Verarbeitungsbedingungen angepasst werden kann.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine ablativ wirkende Zusammensetzung, umfassend
einen Bestandteil A, der einen multifunktionellen Michael-Akzeptor enthält, der mindestens zwei elektronenarme Kohlenstoffmehrfachbindungen pro Molekül als funktionelle Michael-Akzeptor-Gruppen aufweist;
einen Bestandteil B, der einen multifunktionellen Michael-Donor enthält, der mindestens zwei C,H-saure Gruppen pro Molekül als funktionelle Michael-Donor-Gruppen aufweist;
einen Bestandteil C, der eine Verbindung enthält, die eine X-H-Gruppe aufweist, wobei diese Verbindung mit dem Bestandteil A reagieren kann und wobei X für N, P, O, S oder C steht, mit der Maßgabe, dass wenn X für C steht, C Teil einer sauren Methylgruppe ist;
einen Bestandteil D, der einen Katalysator für die Michael-Additionsreaktion enthält; und
einen Bestandteil E, der ein ablativ wirkendes Brandschutzadditiv enthält.

Durch die erfindungsgemäße Zusammensetzung können in einfacher und schneller Weise Beschichtungen mit der für die jeweilige Feuerwiderstandsdauer erforderlichen Schichtdicke aufgetragen werden, wobei die Verarbeitungszeit in einfacher Weise einstellbar ist. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten die Arbeitszeit erheblich reduziert werden kann. Aufgrund der im Applikationsbereich geringen Viskosität der Zusammensetzung, eingestellt über geeignete Verdickersysteme, ist im Unterschied zu Epoxid-Amin-Systemen ein Auftragen ohne Erwärmen der Zusammensetzung zum Beispiel durch das weitverbreitete Airless-Sprühverfahren möglich.

Ein weiterer Vorteil liegt darin, dass auf gesundheitsgefährdende und kennzeichnungspflichtige Substanzen, wie beispielsweise kritische Aminverbindungen, weitgehend oder vollständig verzichtet werden kann.

Ein weiterer Vorteil liegt darin, dass die erfindungsgemäße Zusammensetzung einen hohen Füllgrad mit den Brandschutzadditiven aufweisen kann, so dass selbst mit dünnen Schichten eine große isolierende Wirkung erreicht wird. Der mögliche hohe Füllgrad der Zusammensetzung kann selbst ohne die Verwendung von leicht flüchtigen Lösungsmitteln erreicht werden. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25% typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95% der Beschichtung auf dem zu schützenden Substrat.

Im Brandfall erweicht das Bindemittel und die darin erhaltenen Brandschutzadditive zersetzen sich abhängig von den verwendeten Additiven in einer endothermen physikalischen oder chemischen Reaktion unter Bildung von Wasser und inerten Gasen, was zum einen zur Kühlung der Kabel und zum anderen zur Verdünnung der brennbaren Gase oder durch Ausbilden einer Schutzschicht, die das Substrat vor Wärme- und Sauerstoffangriff schützt, führt und zum anderen die Ausbreitung des Feuers durch den Abbrand der Beschichtung verhindert.

Die erfindungsgemäßen Zusammensetzungen zeigen eine ausgezeichnete Haftung an unterschiedlichen Untergründen verglichen mit lösemittel- oder wasserbasierten Systemen, wenn diese ohne Grundierung aufgetragen werden, so dass sie universell eingesetzt werden können und nicht nur an den zu schützenden Leitungen sondern auch anderen Trägermaterialien haften.

Zum besseren Verständnis der Erfindung werden die folgenden Erläuterungen der hierin verwendeten Terminologie als sinnvoll erachtet. Im Sinne der Erfindung:
- ist eine *"Michael-Addition"* allgemein eine Reaktion zwischen einem Michael-Donor und einem Michael-Akzeptor, häufig in Gegenwart eines Katalysators, wie beispielsweise einer starken Base; die Michael-Addition ist in der Literatur hinreichend bekannt und häufig beschrieben;
- ist ein *"Michael-Akzeptor"* eine Verbindung mit mindestens einer C-C-Doppelbindung oder C-C-Dreifachbindung, die nicht aromatisch und die elektronenarm ist; der Michael-Akzeptor setzt sich aus der funktionellen Michael-Akzeptor-Gruppe und einem Gerüst zusammen;

- ist eine *"funktionelle Michael Akzeptor-Gruppe"* die Gruppe im Michael-Akzeptor, die eine funktionelle Gruppe, genauer eine elektronenziehende Gruppe, und in α-Position hierzu die C-C-Doppelbindung oder C-C-Dreifachbindung, an die der Michael-Donor addiert, umfasst; die elektronenarme C-C-Doppelbindung oder C-C-Dreifachbindung wird auch als Michael-aktive Kohlenstoffmehrfachbindung bezeichnet; die funktionelle Michael-Akzeptor-Gruppe ist an das Gerüst gebunden bzw. in dieses eingebunden; ein Michael-Akzeptor kann eine oder mehrere separate funktionelle Michael-Akzeptor-Gruppen aufweisen; jede funktionelle Michael-Akzeptor-Gruppe kann eine Michael-aktive Kohlenstoffmehrfachbindung aufweisen; die Gesamtzahl an Michael-aktiven Kohlenstoffmehrfachbindungen an dem Molekül entspricht der Funktionalität des Michael-Akzeptors;
- ist ein *"multifunktioneller Michael-Akzeptor"* eine Verbindung, die zwei oder mehrere funktionelle Michael-Akzeptor-Gruppen bzw. Michael-aktive Kohlenstoffmehrfachbindungen aufweist;
- bedeutet *"elektronenarm",* dass die Kohlenstoffmehrfachbindung in unmittelbarer Nähe, d.h. in der Regel an dem der Mehrfachbindung benachbarten Kohlenstoffatom, elektronenziehende Gruppen trägt, die Elektronendichte von der Mehrfachbindung abziehen, wie beispielsweise C=O;
- ist ein *"Michael-Donor"* eine C,H-saure Verbindung, d.h. eine Verbindung mit mindestens einer sauren C,H-Bindung, die mindestens ein Carbanion bilden kann, das in der Lage ist, an den Michael-Akzeptor zu addieren; das saure Wasserstoffatom wird auch als Michael-aktives Wasserstoffatom bezeichnet; der Michael-Donor setzt sich aus der funktionellen Michael-Donor-Gruppe und einem Gerüst zusammen;
- ist eine *"funktionelle Michael-Donor-Gruppe"* die Gruppe im Michael-Donor, die eine funktionelle Gruppe und in α-Position hierzu das Kohlenstoffstoffatom umfasst, aus dem das Carbanion gebildet wird; die funktionelle Michael-Donor-Gruppe ist an das Gerüst gebunden; ein Michael-Donor kann eine oder mehrere separate funktionelle Michael-Donor-Gruppen aufweisen; jede funktionelle Michael-Donor-Gruppe kann ein Michael-aktives Wasserstoffatom aufweisen; die Gesamtzahl an Michael-aktiven Wasserstoffatomen an dem Molekül entspricht der Funktionalität des Michael-Donors;
- ist ein *"multifunktioneller Michael-Donor"* eine Verbindung, die zwei oder mehrere funktionelle Michael-Donor-Gruppen bzw. Michael-aktive Wasserstoffatome aufweist;
- ist das *"Gerüst"* der Teil des Donor- oder Akzeptormoleküls, an das die funktionelle Michael-Donor-Gruppe oder die funktionelle Michael-Akzeptor-Gruppe angebunden ist;
- bedeutet *"ablativ wirkend",* dass bei Einwirken erhöhter Temperaturen, d.h. oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird; dieser Begriff wird gleichbedeutend mit dem Begriff *"endotherm zersetzend"* verwendet;
- bedeutet *"(Meth)acryl...*/*...(meth)acryl..."* dass sowohl die "Methacryl.../...methacryl..."- als auch die "Acryl.../...acryl..."-Verbindungen umfasst sein sollen;
- ist ein *"Oligomer"* ein Molekül mit 2 bis 5 Wiederholungseinheiten und ist ein *"Polymer"* ein Molekül mit 6 oder mehr Wiederholungseinheiten und können Strukturen aufweisen, die linear, verzweigt, sternförmig, gewunden, hyperverzweigt oder vernetzt sind; im Allgemeinen können Polymere eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.

Im Allgemeinen wird angenommen, dass das Umsetzen eines Michael-Donors mit einer Funktionalität von zwei mit einem Michael-Akzeptor mit einer Funktionalität von zwei zu linearen molekularen Strukturen führen wird. Oftmals müssen molekulare Strukturen erzeugt werden, die verzweigt und/oder vernetzt sind, wofür die Verwendung von mindestens einem Inhaltsstoff mit einer Funktionalität von größer zwei erforderlich ist. Daher haben der multifunktionelle Michael-Donor oder der multifunktionelle Michael-Akzeptor oder beide bevorzugt eine Funktionalität von größer zwei.

Zweckmäßig wird als Michael-Akzeptor eine Verbindung mit mindestens zwei elektronenarmen Kohlenstoffmehrfachbindungen, wie C-C-Doppelbindungen oder C-C-Dreifachbindungen, bevorzugt C-C-Doppelbindungen, pro Molekül als funktionelle Michael-Akzeptor-Gruppe verwendet.

Gemäß einer Ausführungsform der Erfindung ist der Michael-Akzeptor eine Verbindung mit mindestens einer funktionellen Michael-Akzeptor-Gruppe mit der Struktur (I) oder (II): 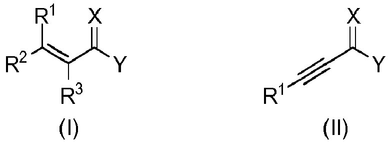 in denen R¹, R² und R³ jeweils unabhängig voneinander Wasserstoff oder organische Reste darstellen, wie zum Beispiel eine lineare, verzweigte oder cyclische, gegebenenfalls substituierte Alkylgruppe, Arylgruppe, Aralkylgruppe (auch aryl-substituierte Alkylgruppe genannt) oder Alkarylgruppe (auch alkyl-substituierte Arylgruppe genannt), einschließlich Derivate und substituierte Versionen davon, wobei diese unabhängig voneinander zusätzliche Ethergruppen, Carboxylgruppen, Carbonylgruppen, Thiol-analoge Gruppen, Stickstoff-enthaltende Gruppen oder Kombinationen davon enthalten können; X Sauerstoff, Schwefel oder NR⁴ darstellt, worin R⁴ Wasserstoff oder jede der organischen Gruppen, wie sie oben für R¹, R² und R³ beschrieben sind, darstellt; Y OR⁵, SR⁵ oder NR⁵R⁶ darstellt, worin R⁵ und R⁶ unabhängig voneinander Wasserstoff oder jede der organischen Gruppen, wie sie oben für R¹, R² und R³ beschrieben sind, darstellt.

Bevorzugt ist die funktionelle Michael-Akzeptor-Gruppe eine Gruppe mit der Struktur (III): 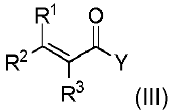 in der R¹, R² und R³ wie oben beschrieben sind und Y OR⁵ oder NR⁵R⁶ darstellt, wobei R⁵ und R⁶ wie oben beschrieben sind.

Jede funktionelle Michael-Akzeptor-Gruppe kann durch eines oder mehrere von R¹, R², R³, R⁴, R⁵ oder R⁶ an eine andere funktionelle Michael-Akzeptor-Gruppe oder ein Gerüst direkt angebunden sein.

Als Michael-Donor kann jede C,H-saure Verbindung verwendet werden, die über mindestens zwei funktionelle Michael-Donor-Gruppen verfügt und Carbanionen, insbesondere Enolat-Anionen, bilden kann, welche in einer Michael-Reaktion an elektronenarme Doppelbindungen addieren können. Dabei verfügt eine funktionelle Michael-Donor-Gruppe über mindestens eine saure CH-Bindung. Damit verfügt ein difunktioneller Michael-Donor, der zwei funktionelle Michael-Donor-Gruppen enthält, welche jeweils eine saure CH-Bindung aufweisen, über zwei saure CH-Bindungen pro Molekül. Ein trifunktioneller Michael-Donor kann drei funktionelle Michael-Donor-Gruppen mit jeweils nur einer sauren CH-Bindung enthalten oder er kann zwei funktionelle Michael-Donor-Gruppen enthalten, wovon eine Gruppe nur eine und die zweite Gruppe zwei saure CH-Bindungen enthält. Das Carbanion wird in der Regel erst nach Abspaltung des Michael-aktiven Wasserstoffatoms, durch eine geeignete, stöchiometrisch oder katalytisch wirksame Base, freigesetzt.

Zweckmäßig ist das Michael-aktive Wasserstoffatom an ein Kohlenstoffatom gebunden, das zwischen zwei elektronenziehenden Gruppen, wie zum Beispiel C=O, sitzt.

Beispiele geeigneter funktioneller Michael-Donor-Gruppen umfassen β-Ketoester, 1,3-Diketone, Malonester und Malonesterderivate, wie Malonamide, und β-Ketoamide (worin das Michael-aktive Wasserstoffatom an ein Kohlenstoffatom angebunden ist, welches zwischen den Carbonylgruppen sitzt), Cyanoacetatester und Cyanoacetamide (worin das Michael-aktive Wasserstoffatom an ein Kohlestoffatom gebunden ist, welches zwischen einer Carbonylgruppe und einer Cyanogruppe sitzt) sowie α-Nitroalkane.

Jede funktionelle Michael-Donor-Gruppe kann analog der Michael-Akzeptor-Gruppe an eine andere funktionelle Michael-Donor-Gruppe oder ein Gerüst direkt angebunden sein.

Der multifunktionelle Michael-Akzeptor und/oder der multifunktionelle Michael-Donor der vorliegenden Erfindung können über irgendeines einer breiten Vielzahl von Gerüsten verfügen, wobei diese gleich oder unterschiedlich sein können.

In einigen Ausführungsformen der vorliegenden Erfindung ist das Gerüst des multifunktionellen Michael-Donors oder des multifunktionellen Michael-Akzeptors oder von beiden ein Monomer, ein Oligomer oder ein Polymer.

Bevorzugte Gerüste für multifunktionelle Michael-Akzeptoren haben ein Molekulargewicht (Mw) von 5.000 oder weniger, stärker bevorzugt von 2.000 oder weniger und am stärksten bevorzugt von 1.000 oder weniger.

Bevorzugte Gerüste des multifunktionellen Michael-Donors haben ein Molekulargewicht (Mw) von 200 oder größer.

Als Polymere können dabei folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester sowie Copolymere oder Gemische davon.

In einigen Ausführungsformen der Erfindung wird/werden eine oder mehrere Polyolverbindungen, d.h. einer oder mehrere mehrwertige(r) Alkohol(e) als mindestens ein Gerüst verwendet. Einige mehrwertige Alkohole, die als Gerüste entweder für den multifunktionellen Michael-Akzeptor oder den multifunktionellen Michael-Donor geeignet sind, umfassen zum Beispiel Alkandiole, Alkylenglykole, wie Ethylenglykol, Propylenglykol, Glycerole, Zucker, Pentaerythritole, mehrwertige Derivate davon oder Gemische davon. Einige Beispiele für mehrwertige Alkohole, die als Gerüste geeignet sind, sind Neopentylglykol, Trimethylolpropan, Ethylenglykol und Polyethylenglykol, Propylenglykol und Polypropylenglykol, Butandiol, Pentandiol, Hexandiol, Tricyclodecandimethylol, 2,2,4-Trimethyl-1,3-pentandiol, Bisphenol A, Cyclohexandimethanol, alkoxylierte und/oder propoxylierte Derivate von Neopentylglykol und Tertraethylenglykolcyclohexandimethanol, Hexandiol, Rizinusöl und Trimethylolpropan.

In einer bevorzugten Ausführungsform ist die Struktur (III) über R₄ durch eine Esterbindung an eine Polyolverbindung gebunden, wobei die Polyolverbindung wie oben definiert ist.

Einige geeignete multifunktionelle Michael-Akzeptoren in der vorliegenden Erfindung umfassen zum Beispiel Moleküle, in denen einige oder alle der Strukturen (II) Reste von (Meth)acrylsäure, Fumarsäure oder Maleinsäure, substituierte Versionen oder Kombinationen davon sind, die über eine Esterbindung an das multifunktionelle Michael-Akzeptor-Molekül angebunden sind. Eine Verbindung mit Strukturen (II), die zwei oder mehr Reste von (Meth)acrylsäure umfassen, wird hierin als "polyfunktionelles (Meth)acrylat" bezeichnet. Polyfunktionelle (Meth)acrylate mit mindestens zwei Doppelbindungen, die als der Akzeptor in der Michael-Addition agieren können, sind bevorzugt.

Beispiele geeigneter Di(meth)acrylate umfassen, sind aber nicht darauf beschränkt: Ethylenglykol-di(meth)acrylat, Propylenglykol-di(meth)acrylat, Diethylenglykol-di(meth)acrylat, Dipropylenglykol-di(meth)acrylat, Triethylenglykol-di(meth)acrylat, Tripropylenglykol-di(meth)acrylat, Tertraethylenglykol-di(meth)acrylat, Tetrapropylenglykol-di(meth)acrylat, Polyethylenglykol-di(meth)acrylat, Polypropylenglykol-di(meth)acrylat, einfach oder mehrfach ethoxyliertes Bisphenol A-Di(meth)acrylat, Bisphenol A diglycidylether-di(meth)acrylat, Resorcinoldiglycidylether-di(meth)acrylat, 1,3-Propandiol-di(meth)acrylat, 1,4-Butanediol-di(meth)acrylat, 1,5-Pentandiol-di(meth)acrylat, 1,6-Hexandiol-di(meth)acrylat, Neopentylglykol-di(meth)acrylat, Cyclohexanedimethanol-di(meth)acrylat, einfach oder mehrfach ethoxyliertes Neopentylglykol-di(meth)acrylat, einfach oder mehrfach propoxyliertes Neopentylglykol-di(meth)acrylat, einfach oder mehrfach ethoxyliertes Cyclohexandimethanol-di(meth)acrylat, propoxyliertes Cyclohexandimethanol-di(meth)acrylat, Arylurethan-di(meth)acrylate, aliphatisches Urethan-di(meth)acrylat, Polyester-di(meth)acrylat und Gemische davon.

Beispiele geeigneter Tri(meth)acrylate umfassen, sind aber nicht darauf beschränkt: Trimethylolpropan-tri(meth)acrylat, trifunktionelles (Meth)acrylsäure-s-triazin, Glycerol-tri(meth)acrylat, einfach oder mehrfach ethoxyliertes Trimethylolpropan-tri(meth)acrylat, einfach oder mehrfach propoxyliertes Trimethylolpropan-tri(meth)acrylat, Tris(2-hydroxyethyl)isocyanurat-tri(meth)acrylat, einfach oder mehrfach ethoxyliertes Glycerol-tri(meth)acrylat, einfach oder mehrfach propoxyliertes Glycerol-tri(meth)acrylat, Pentaerythritol-tri(meth)acrylat, Arylurethan-tri(meth)acrylate, aliphatische Urethan-tri(meth)acrylate, Melamin-tri(meth)acrylate, Epoxy-Novolac-tri(meth)acrylate, aliphatisches Epoxy-tri(meth)acrylat, Polyester-tri(meth)acrylat und Gemische davon.

Beispiele geeigneter Tetra(meth)acrylate umfassen, sind aber nicht darauf beschränkt: Di(trimethylolpropan)-tetra(meth)acrylat, Pentaerythritol-tetra(meth)acrylat, einfach oder mehrfach ethoxyliertes Pentaerythritol-tetra(meth)acrylat, einfach oder mehrfach propoxyliertes Pentaerythritol-tetra(meth)acrylat, Dipentaerythritol-tetra(meth)acrylat, einfach oder mehrfach ethoxyliertes Dipentaerythritol-tetra(meth)acrylat, einfach oder mehrfach propoxyliertes Dipentaerythritol-tetra(meth)acrylat, Arylurethan-tetra(meth)acrylate, aliphatische Urethan-tetra(meth)acrylate, Melamin-tetra(meth)acrylate, Epoxy-Novolac-tetra(meth)acrylate, Polyester-tetra(meth)acrylate und Gemische davon.

Es können auch Gemische der mehrfunktionellen (Meth)acrylate untereinander verwendet werden.

Beispiele geeigneter Michael-Donoren umfassen: Acetoacetate von einfach oder mehrfach ethoxylierten und propoxylierten Diolen, Triolen und Polyolen, Ethylenglycoldiacetoacetat, 1,2-Propandioldiacetoacetat, 1,3-Propandioldiacetoacetat, 1,4-Butandioldiacetoacetat, 1,6-Hexandioldiacetoacetat, Neopentylglycoldiacetoacetat, Bisphenol A-diacetoacetat, einfach oder mehrfach ethoxyliertes Bisphenol A-diacetoacetat, Isosorbiddiacetoacetat, Cyclohexandimethanoldiacetoacetat, 1,3-Benzoldimethanoldiacetoacetat (1,3-BDDA), 1,4-Benzoldimethanoldiacetoacetat (1,4-BDDA), Trimethylolpropantriacetoacetat (Lonzamon AATMP), Glycerintriacetoacetat, Polycaprolactontriacetoacetat, Pentaerythritoltetraacetoacetat, Dipentaerythritolhexaacetoacetat, Glucosetriacetoacetat, Glucosetetraacetoacetat, Glucosepentaacetoacetat, Sucroseacetoacetate, Sorbitoltriacetoacetat, Sorbitoltetraacetoacetat, einfach oder mehrfach ethoxyliertes Neopentylglycoldiacetoacetat, propoxylierte Glucoseacetoacetatate, propoxylierte Sorbitolacetoacetate, propoxylierte Sucroseacetoacetate, Polyesteracetoacetatate, worin der Polyester von mindestens einer Disäure und minestens einem Diol abgeleitet ist, 1,2-Ethylenbisacetoacetamid, Polyesteramidacetoacetate, worin das Polyesteramid von mindestens einer Disäure und mindestens einem Diamin abgeleitet ist, Acetoacetatfunktionalisiertes Rizinusöl, Polyester-Polymer, (Meth)acrylatpolymer.

Der Michael-Donor kann alleine oder als Gemisch von zwei oder mehreren, unterschiedlichen Verbindungen eingesetzt werden.

Je nach Funktionalität des Michael-Akzeptors und/oder des Michael-Donors können der Vernetzungsgrad des Bindemittels und somit sowohl die Festigkeit der entstehenden Beschichtung als auch deren elastische Eigenschaften eingestellt werden. Gleichzeitig hat dieses einen direkten Einfluss auf die erzielbare Expansion der entstehenden Aschekruste im Brandfall.

In der Zusammensetzung der vorliegenden Erfindung kann der relative Anteil an multifunktionellen Michael-Akzeptoren zu multifunktionellen Michael-Donoren durch das reaktive Äquivalentverhältnis, welches das Verhältnis der Anzahl aller funktionellen Michael-Akzeptor-Gruppen mit den Strukturen (I), (II) bzw. (III) in der Zusammensetzung zu der Anzahl an Michael-aktiven Wasserstoffatomen in der Zusammensetzung ist, charakterisiert werden. In einigen Ausführungsformen ist das reaktive Äquivalentverhältnis 0,1 bis 10:1; bevorzugt 0,2 bis 5:1; stärker bevorzugt 0,3 bis 3:1; und am stärksten bevorzugt 1:2 bis 2:1.

Durch die Verwendung einer Verbindung, die eine X-H-Gruppe enthält, bevorzugt solche in denen X für N, P oder C als Teil einer sauren Methylgruppe steht, als Bestandteil C wird es möglich, ein einstellbares Reaktivitätsprofil bereitzustellen, das eine anfängliche Induktionsphase mit verringerter Reaktionsrate direkt nach dem Mischen und Aktivieren der Zusammensetzung aufweist, gefolgt von einem Anstieg der Reaktivität nachdem die Bestandteile der Zusammensetzung bereits länger vermischt sind. Diese Induktionszeit kann eingestellt werden, um eine verlängerte "Offenzeit" bereitzustellen, in der die Zusammensetzung hinreichend flüssig bleibt, um verarbeitet werden zu können. Ferner ermöglicht eine verlängerte Offenzeit, dass gegebenenfalls in der Zusammensetzung enthaltene Lösungsmittel oder in der Beschichtung vorhandene Luftblasen entweichen können. Die Induktionsphase erlaubt es dem System über einen längeren Zeitraum zu Fließen und sich zu Nivellieren. Dadurch können Oberflächendefekte minimiert werden, die häufig bei einer (zu) schnellen Aushärtung der Zusammensetzung auftreten.

Über die Einstellung des Zeitraums, über den gegebenenfalls in der Zusammensetzung vorhandene Lösungsmittel verdunsten können, lässt sich die Härte der ausgehärteten Zusammensetzungen beeinflussen. Nach der Induktionsphase verhält sich die Zusammensetzung wie eine entsprechende Zusammensetzung ohne den Bestandteil C und härtet entsprechend aus.

Die Bestandteile der Zusammensetzung bilden ein Säure-Base-Gleichgewichtssystem. Das Reaktivitätsprofil der Zusammensetzung resultiert aus der Wahl der entsprechenden pKa-Werte der sauren Bestandteile B und C in der Zusammensetzung, die zu dem Säure-Base-Gleichgewicht beitragen, und der Reaktivität der deprotonierten Form der Bestandteile gegenüber dem Bestandteil A.

Im Folgenden sind pKa-Werte ausgewählter Bestandteile B oder C aufgelistet:

| | |
|---|---|
| Benzotriazol | 8,2 |
| Acetylaceton | 9,0 |
| Ethosuximid | 9,3 |
| 1,2,3-Triazol | 9,4 |
| Succinimid | 9,5 |
| 4-Nitro-2-methylimidazol | 9,6 |
| Uracil | 9,9 |
| Phenol | 10,0 |
| Benzolsulfonamid | 10,1 |
| 5, 5-Dimethylhydantoin | 10,2 |
| 1,2,4-Triazol | 10,2 |
| Nitromethan | 10,2 |
| Isatin | 10,3 |
| Ethylacetoacetat | 10,7 |
| Diethylmalonat | 13,0. |

Die X-H-Gruppe des Bestandteils C hat eine höhere Acidität als die saure C-H-Gruppe des Bestandteils B. Bevorzugt hat der Bestandteil C einen pKa (bestimmt in wässrigem Medium), der zumindest eine ganzzahlige Einheit, bevorzugt zwei ganzzahlige Einheiten unter dem pKa des Bestandteils B liegt. Insbesondere ist der pKa des Bestandteils C kleiner als 13, bevorzugt kleiner als 12, stärker bevorzugt kleiner als 11 und noch stärker bevorzugt kleiner als 10. Bei einer höheren Acidität treten Probleme mit dem Katalysator auf. Daher ist der pKa des Bestandteils C bevorzugt größer als 7, stärker bevorzugt größer als 8. Die Unterschiede in den pKa-Werten der Bestandteile B und C stellen sicher, dass bei der Anwendung der Zusammensetzung der Bestandteil C bevorzugt vor dem Bestandteil B aktiviert, d.h. deprotoniert wird.

In einer Zusammensetzung, welche die Bestandteile A, B und C enthält, hat der Bestandteil C in einer Michael-Addition eine höhere Reaktivität gegenüber dem Bestandteil A als der Bestandteil B, so dass der Bestandteil C schneller mit dem Bestandteil A reagiert als der Bestandteil B. Die höhere Reaktivität des Bestandteils C führt zu der Induktionszeit.

Der Bestandteil C hat in der Michael-Addition eine Reaktivität verglichen mit den sauren C-H-Gruppen des Bestandteils B, die um einen Faktor von mindestens 3, bevorzugt mindestens 10, stärker bevorzugt mindestens 30 höher ist, bestimmt unter vergleichbaren Bedingungen, wobei die Bestandteile bei Raumtemperatur mit einem Überschuss an Michael-Akzeptoren in Gegenwart einer Base, die mindestens 1 Mol-% des Michael-Donors deprotonieren kann, umgesetzt wird. Dies ist für die Bereitstellung der Induktionszeit hilfreich. Sind andere Anwendungstemperaturen erforderlich, sollte die relative Reaktivität bei den angepassten Temperaturen bestimmt werden, um geeignete Verbindungen auszuwählen.

In der erfindungsgemäßen Zusammensetzung sind die X-H-Gruppen bevorzugt mit einem Anteil von mindestens 50 Mol-%, bevorzugt mindestens 100 Mol-%, stärker bevorzugt mindestens 150 Mol-% vorhanden, bezogen auf die Menge an Base, die durch den Bestandteil D freigesetzt wird. Ferner sind die X-H-Gruppen in dem Bestandteil C in einer Menge von nicht mehr als 30 Mol.-%, bevorzugt nicht mehr als 20 Mol-%, bezogen auf die sauren C-H-Gruppen des Bestandteils B, vorhanden.

Die geeignete Menge wird hauptsächlich durch den Säure-Base-Charakter des Bestandteils C gegenüber dem Bestandteil B und die Reaktivität des korrespondierenden Anions gegenüber dem Bestandteil A bestimmt. Sie kann also für verschiedene Systeme variieren. Die Offenzeit kann somit bereits bei sehr geringen Mengen an Bestandteil C eingestellt werden. Dies ist vorteilhaft, da die sehr geringen Mengen an Bestandteil C die Eigenschaften der resultierenden ausgehärteten Zusammensetzung, wie etwa die chemischen und mechanischen Eigenschaften eine Beschichtung, kaum beeinflussen. Gewöhnlich sind die X-H-Gruppen in dem Bestandteil C mit einem Anteil vorhanden, der nicht mehr als 30 Mol-%, bevorzugt nicht mehr als 20 Mol-%, bezogen auf die C-H-Gruppen des Bestandteils B, entspricht.

Geeignete Verbindungen als Bestandteil C sind Verbindungen worin X für ein Kohlenstoffatom (C) steht und das Kohlenstoffatom Teil einer sauren Methylgruppe ist, wobei Nitromethan bevorzugt ist. In weiteren geeigneten Verbindungen mit einer X-H-Gruppe steht X für ein Sauerstoffatom (O), wobei eine aromatische Hydroxylgruppe bevorzugt ist.

Bevorzugte Verbindungen sind saure Aza-Verbindungen, in denen X für ein Stickstoffatom (N) steht, wobei die N-H-Gruppe bevorzugt Teil einer Gruppe Ar-NH-(C=O)-, -(C=O)-NH-(C=O)- oder -NH-(O=S=O) oder ein Heterocyclus ist, indem das Stickstoffatom der N-H-Gruppe Bestandteil des Ringsystems ist. Stärker bevorzugt ist die Verbindung ein Imid-Derivat, bevorzugt cyclisches Imid-Derivat, besonders bevorzugt gegebenenfalls substituertes Succinimid oder Glutarimid. Beispielhaft kann als substituiertes Succinimid Ethosuximid genannt werden.

Andere geeignete Verbindung, in denen X für ein Stickstoffatom steht, sind Hydantoin-Derivate, wie 5,5-Dimethylhydrantoin, Sulfonamide, wie aromatische Sulfonamide, z.B. Benzol- oder Toluolsulfonamid, oder heterocyclische Verbindungen mit einer N-H-Gruppe, bevorzugt ein gegebenenfalls substituiertes Triazol, Pyrazol oder Imidazol, insbesondere 1,2,4-Triazole, Benzotriazol oder 2-Methyl-4-nitroimidazol oder ein Uracil-Derivat.

Der Bestandteil C kann in deprotonierter Form (in einem Säure-Base-Gleichgewicht mit anderen Bestandteilen) vorliegen.

Die Mengenangaben hierin beziehen sich sowohl auf die neutrale als auch auf die deprotonierte Form. Dies bedeutet, dass wenn der Bestandteil C in einer Menge von mehr als 100 % bezogen auf einen basischen Katalysator, vorhanden ist, der Bestandteil C und der Katalysator in einem Gleichgewicht vorliegen können, so dass die deprotonierte Form des Bestandteils C als dominierende Spezies, welche die Aushärtung der Zusammensetzung initiiert, vorhanden ist, anstatt dass Bestandteil D als basische Spezies und Bestandteil C als saure Spezies vorliegt. Bevorzugt ist die X-H-Funktionalität, d.h. die Anzahl der X-H-Gruppen pro Molekül des Bestandteils C niedrig, bevorzugt geringer als 4, stärker bevorzugt geringer als 2, am stärksten bevorzugt ist sie 1.

Der Bestandteil C kann eine oder mehrere unterschiedliche Verbindung mit mindestens einer X-H-Gruppe enthalten.

Die Zusammensetzung kann neben dem Bestandteil C einen weiteren Bestandteil B2 umfassen, der saure Protonen (C-H) in aktivierten Methylen- oder Methin-Gruppen enthält, eine höhere Acidität als der Bestandteil B hat und der mit dem Bestandteil A reagieren kann. Der Bestandteil B2 kann zu dem Effekt der Beeinflussung der Offenzeit beitragen. Hierzu sollte der Bestandteil B2 zweckmäßig mit einem Anteil zwischen 10 und 40 Gew.-% enthalten sein, was deutlich mehr ist als für den Bestandteil C. In der Zusammensetzung sind die C-H-Gruppen in dem Bestandteil B2 mit einem Anteil zwischen 1 und 50 Mol-%, bevorzugt zwischen 5 und 40 Mol-% enthalten, bezogen auf den gesamten Anteil an C-H-Gruppen in dem Bestandteil B.

Der Bestandteil B2 hat bevorzugt eine Struktur Z-C(=O)-CHR-C(=O)-Z', worin R für Wasserstoff oder eine Alkyl-, Aralkyl- oder Arylgruppe steht, und Z und Z' gleich oder verschieden sein können und für verschiedene Substituentengruppen stehen, insbesondere Alkyl-, Aralkyl oder Arylgruppen (R*), Alkoxygruppen (-OR*) oder ein polymeres Grundgerüst, oder worin die -C(=O)-Z- und/oder -C(=O)-Z'-Einheit durch CN oder Phenyl ersetzt ist.

Der Bestandteil C und sofern in der Zusammensetzung vorhanden der Bestandteil B2 sind bei dem vorne genannten reaktiven Äquivalentverhältnis, welches das Verhältnis der Anzahl aller funktionellen Michael-Akzeptor-Gruppen in der Zusammensetzung zu der Anzahl an Michael-aktiven Wasserstoffatomen in der Zusammensetzung ist, zu berücksichtigen.

Der Unterschied der Acidität der beiden C-H-sauren Bestandteile B und B2 wird so gewählt, dass der pKa des Bestandteils B2 zwischen 0,5 und 6, bevorzugt zwischen 1 und 5 und stärker bevorzugt zwischen 1,5 und 4 Einheiten geringer ist als der pKa des Bestandteils B.

Die Reaktion zwischen dem Michael-Akzeptor und dem Michael-Donor findet in Anwesenheit eines Katalysators (Bestandteil D) statt. Als Katalysatoren können die üblicherweise für Michael-Additionsreaktionen verwendeten Basen, ggf. in Kombination mit einem geeigneten Phasentransferkatalysator, Nukleophile oder Phosphine, die dem Fachmann bekannt sind, verwendet werden. Weiterhin können quarternäre Ammoniumcarbonate, -bicarbonate, Phosphoniumcarbonate und -bicarbonate als Katalysatoren eingesetzt werden.

Geeignete Basen sind: tertiäre Amine, wie Triethylamin, Ethyl-*N,N*-diisopropylamin, 1,4-Diazabicyclo[2.2.2]octan (DABCO); "blockierte" Basen, wie Formiatsalze von Amin- oder Amidinbasen; Amidinbasen, wie 1,8-Diazabicyclo[5.4.0]undec-7-en (DBU) und 1,5-Diazabicyclo[4.3.0]non-5-en (DBN); Guanidinbasen, wie Tetramethylguanidin (TMG) und 1,5,7-Triazabicyclo[4.4.0]dec-5-en (TBD); anorganische Basen, wie Kaliumcarbonat, Kaliumbicarbonat, Phosphate und Hydrogenphosphate; quartäre Ammoniumhydroxide, wie Benzyltrimethylammoniumhydroxid und Tetrabutylammoniumhydroxid (TBAH); Protonenschwamm, wie 1,8-Bis(dimethylamino)naphthalin; Pyridinbasen, wie 2,6-Di-*tert-*butylpyridin, 2,6-Lutidin und Dimethylaminopyridin (DMAP); Carbonsäuresalze, wie Natrium- oder Kaliumsalze von Carbonsäuren, z.B. Acetate; Alkoholate, wie Natriummethanolat, Kaliummethanolat, Natriumethanolat, Kaliumethanolat und Kalium-*tert*-butylalkoholat.

Geeignete Phasentransferkatalysatoren sind: quartäre Ammonium- oder Phosphoniumverbindungen, wie Methyltrioctylammoniumchlorid, Benzyltrimethylammoniumchlorid, Hexadecyltributylphosphoniumbromid, Tetra-n-butylammoniumchlorid und Tetra-n-butylammoniumbromid. Die Katalyse von Michael-Additionsreaktionen durch Phasentransferkatalysatoren ist beispielsweise beschrieben in E. Diez-Barra, A. de la Hoz, S. Merino, A. Rodriguez, P. Sänchez-Verdü, Tetrahedron 1998, 54, 1835.

Geeignete Nukleophile sind: primäre oder sekundäre Alkylamine wie *n*-Pentylamin und Di-n-propylamin.

Geeignete Phosphine sind: tertiäre Phosphine, wie Tri-*n*-propylphosphin, Tri-n-butylphosphin, Tri-n-octylphosphin, Dimethylphenylphosphin, Methyldiphenylphosphin oder Triphenylphosphin, wie beispielsweise in J. W. Chan, C. E. Hoyle, A. B. Lowe, M. Bowman, Macromolecules 2010, 43, 6381-6388 beschrieben. In dieser Hinsicht wird ferner Bezug genommen auf die WO 2010/030771 A1, deren Inhalt hiermit in diese Anmeldung aufgenommen wird.

Geeignete quarternäre Ammoniumcarbonate oder Phosphoniumcarbonate sind: Tetramethylammoniummethylcarbonat, Tetramethylammoniumethylcarbonat, Tetrabutylammoniummethylcarbonat, Tetrabutylammoniumethylcarbonat, Tetrahexylammoniummethylcarbonat, Tetrahexylammoniumethylcarbonat, Tetraoctylammoniummethylcarbonat, Tetraoctylammoniumethylcarbonat, Tetradecylammoniummethylcarbonat, Tetradecylammoniumethylcarbonat, Hexadecyltrimethylammoniummethylcarbonat, Hexadecyltrimethylammoniumethylcarbonat, Benzyltrimethylammoniummethylcarbonat, Benzyltrimethylammoniumethylcarbonat, Tetrabutylammoniumbicarbonat, Tetrahexylammoniumbicarbonat, Benzyltrimethylammoniumbicarbonat, Tetrabutylphosphoniummethylcarbonat. Derartige Katalysatoren sind beispielsweise beschrieben in M. Fabris, V. Lucchini, M. Noe, A. Perosa, M. Selva, Chem. Eur. J. 2009, 15, 12273 und M. Fabris, M. Noe, A. Perosa, M. Selva, R. Ballini, J. Org. Chem. 2012, 77, 1805. In dieser Hinsicht wird ferner Bezug genommen auf die WO 11/124663 A sowie die WO 11/055463 A, deren Inhalte hiermit in diese Anmeldung aufgenommen werden.

Der Katalysator kann in katalytischen Mengen oder äquimolar oder im Überschuss eingesetzt werden.

Obwohl die Umsetzung des Michael-Akzeptors und des Michael-Donors in Abwesenheit eines Lösungsmittels erfolgen kann, ist es manchmal erforderlich, die Effektivität der Umsetzung oder die Viskosität der Bestandteile, insbesondere des Michael-Akzeptors zu verändern und/oder anzupassen.

Bevorzugt wird ein Lösungsmittel verwendet, welches eine geringe Viskosität aufweist und an der Umsetzung teilnimmt und in das Bindemittel eingebaut wird, ein sogenannter Reaktivverdünner. Geeignete Reaktivverdünner sind selbst Michael-Akzeptoren mit mindestens einer funktionellen Michael-Akzeptor-Gruppe, die jedoch monomer oder oligomer, bevorzugt monomer sind, und können die oben genannten entsprechenden Gerüste aufweisen.

Die Wirkungsweise der erfindungsgemäßen ablativ wirkenden Zusammensetzung baut auf einer endothermen physikalischen und/oder chemischen Reaktion auf, wobei Stoffe, die bei deren Zersetzung große Mengen von Energie benötigen, in der Zusammensetzung enthalten sind. Wird die ausgehärtete Zusammensetzung erhöhter Temperatur, wie etwa im Brandfall der eines Feuers ausgesetzt, wird eine Reihe von chemischen und physikalischen Prozessen in Gang gesetzt. Diese Prozesse sind etwa die Freisetzung von Wasserdampf, Veränderung der chemische Zusammensetzung und die Bildung nichtbrennbarer Gase, die den zur Verbrennung notwendigen Sauerstoff von der Kabeloberfläche fernhalten. All diese Prozesse benötigen eine große Menge Energie, die dem Feuer entzogen wird. Nachdem die Umwandlung aller organischen Bestandteile abgeschlossen ist, hat sich eine stabile Isolationsschicht aus anorganischen Bestandteilen gebildet, die eine zusätzliche isolierende Wirkung hat.

Erfindungsgemäß enthält der Bestandteil E daher mindestens ein ablativ wirkendes Brandschutzadditiv, wobei als Additive sowohl einzelne Verbindungen als auch ein Gemisch von mehreren Verbindungen verwendet werden kann.

Zweckmäßig werden als ablativ wirkende Brandschutzadditive solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°, wogegen die Wasserabspaltung von Magnesiumhydroxid bei ca. 350° einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Beispielhaft können folgende Verbindungen genannt werden: LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AlOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren.

In einer bevorzugten Ausführungsform sind die hydrierten Salze ausgewählt aus der Gruppe bestehend aus Al₂(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, MgSO₄·7H₂O, (NH₄)₂SO₄·12H₂O; KAl(SO₄)₂·12H₂O, Na₂SiO₃·9H₂O, Mg(NO₂)₂·6H₂O, Na₂CO₃·7H₂O und Gemischen davon (EP1069172A).

Besonders bevorzugt sind Aluminiumhydroxid, Aluminiumhydroxidhydrate, Magnesiumhydroxid und Zinkborat, da sie eine Aktivierungstemperatur unterhalb 180°C haben.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929 oder E. D. Weil, S. V. Levchik (Hrsg.), Flame Retardants for Plastics and Textiles - Practical Applications, Hanser, 2009, deren Inhalte hiermit in diese Anmeldung augenommen werden.

Das ablativ wirkende Brandschutzadditiv kann in einer Menge von 5 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst gute Isolation zu bewirken, wird der Anteil des Bestandteils E in der Gesamtformulierung so hoch wie möglich eingestellt. Bevorzugt beträgt der Anteil des Bestandteils E in der Gesamtformulierung 5 bis 85 Gew.-% und besonders bevorzugt 40 bis 80 Gew.-%.

Die Zusammensetzung kann neben den ablativ wirkenden Brandschutzadditiven gegebenenfalls übliche Hilfsmittel, wie Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Zwei- oder Mehrkomponenten-System konfektioniert werden.

Wenn der Bestandteil A und der Bestandteil B ohne die Verwendung eines Katalysators bei Raumtemperatur nicht miteinander reagieren, können diese zusammen gelagert werden. Falls eine Reaktion bei Raumtemperatur eintritt, müssen der Bestandteil A und der Bestandteil B reaktionsinhibierend getrennt angeordnet werden. In Anwesenheit eines Katalysators muss dieser getrennt von dem Bestandteil B gelagert werden. Reagiert aufgrund der Natur des Katalysators dieser mit dem Bestandteil A, muss er getrennt von den beiden Bestandteilen gelagert werden. Der Fachmann erkennt bzw. kann einfach ermitteln, welcher Katalysator dazu geeignet ist, zusammen mit dem Bestandteil A eine lagerfähige Komponente zu ergeben. Generell ist wichtig, dass die Bestandteile A und B des Bindemittels und der Katalysator erst unmittelbar vor der Anwendung miteinander gemischt werden und die Härtungsreaktion auslösen.

Der Bestandteil C kann zusammen mit den Bestandteilen A und B oder dem Bestandteil D gelagert werden. Werden die Bestandteile A, B und C miteinander gelagert, ist es bevorzugt, wenn die X-H-Gruppe des Bestandteils C gegenüber dem Bestandteil A in Abwesenheit des Katalysators nicht zu reaktiv ist, um die Lagerstabilität zu erhöhen. Dementsprechend ist es bevorzugt, dass der Bestandteil C in einer Michael-Addition mit dem Bestandteil A ohne Katalysator eine derartige Reaktivität hat, dass dessen Halbwertszeit bei Raumtemperatur mehr als 30 Minuten beträgt, bevorzugt mehr als eine Stunde, stärker bevorzugt mehr als zwei Stunden, noch stärker bevorzugt mehr als vier Stunden, noch stärker bevorzugt mehr als 24 Stunden und am stärksten bevorzugt mehr als 72 Stunden, gemessen in Butylacrylat.

Der Bestandteil E kann dabei als Gesamtmischung oder in Einzelkomponenten aufgeteilt in einer Komponente oder mehreren Komponenten enthalten sein. Die Aufteilung des Bestandteils E erfolgt abhängig von der Verträglichkeit der in der Zusammensetzung enthaltenen Verbindungen, so dass weder eine Reaktion der in der Zusammensetzung enthaltenen Verbindungen miteinander bzw. eine gegenseitige Störung erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Die Zusammensetzung wird als Paste mit einem Pinsel, einer Rolle oder durch Sprühen auf das Substrat, welches metallisch sein kann, Kunststoff im Fall von Kabeln oder beides im Fall von Kabeltrassen oder Weichschotts aus Mineralwolle aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen wie dem Ammoniumpolyphosphat führen kann, bzw. bei der Aufnahme von Staub zu einer reduzierten Intumeszenz. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren.

Deshalb ist die erfindungsgemäße Zusammensetzung insbesondere als Brandschutzbeschichtung, insbesondere sprühbare Beschichtung für Bauteile auf metallischer und nicht metallischer Basis geeignet. Die erfindungsgemäße Zusammensetzung findet vor allem im Baubereich als Beschichtung, insbesondere Brandschutzbeschichtung für einzelne Kabel, Kabelbündel, Kabeltrassen und Kabelkanäle oder andere Leitungen Verwendung sowie als Brandschutzbeschichtung für Stahlkonstruktionselemente, aber auch für Konstruktionselemente aus anderen Materialien, wie Beton oder Holz.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die vorliegende Erfindung betrifft auch Objekte, die erhalten werden, wenn die erfindungsgemäße Zusammensetzung ausgehärtet ist. Die Objekte haben ausgezeichnete ablative Eigenschaften.

Die folgenden Beispiele dienen der weiteren Erläuterung der Erfindung.

### AUSFÜHRUNGSBEISPIELE

Für die Herstellung von erfindungsgemäßen ablativ wirkenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder während des Versprühens vermischt und appliziert.

Zur Bestimmung der Brandschutzeigenschaften wurden die ausgehärtete Zusammensetzung einer Prüfung nach EN ISO 11925-2 unterzogen. Die Prüfung erfolgt in einem zugfrei aufgestellten Brennkasten Mitsubishi FR-D700SC Electric Inverter. Bei der Prüfung wird im Winkel von 45° eine Kleinbrennerflamme für 30 s auf die Probenoberfläche gerichtet, dies entspricht einer Flächenbeflammung.

Es werden jeweils Proben mit den Abmessungen 11 cm x 29,5 cm und einer Anwendungsdicke von 1 mm verwendet. Diese Proben härteten bei Raumtemperatur aus und wurden drei Tage bei 40°C gealtert.

Nach der Alterung von drei Tagen bei 40°C erfolgt die Überprüfung von Entzündlichkeit und Höhe der angegriffenen Fläche.

Die Aushärtungszeit und der Aushärtungsverlauf wurden bestimmt. Dabei wurde mit einem Spatel getestet, wann die Aushärtung der Beschichtung startet.

Für die folgenden Beispiele 1 bis 3 wurde als ablativ wirkendes Brandschutzadditiv (Bestandteil E) Aluminiumtrihydrat (HN 434 der J.M. Huber Corporation, Finnland) verwendet und jeweils in einer Menge von 18,0 g eingesetzt:

### Beispiel 1

| **Bestandteil** | **Menge [g]** |
|---|---|
| Trimethylolpropantriacrylat | 25,9 |
| Trimethylphosphin | 0,3 |
| Trimethylolpropantriacetoacetat | 33,8 |
| Calciumcarbonat ¹ | 71,1 |

### Beispiel 2

| **Bestandteil** | **Menge [g]** |
|---|---|
| Glycerinpropoxylattriacrylat | 29,7 |
| Trimethylolpropantriacetoacetat | 26,8 |
| Kaliumcarbonat | 3,6 |
| Calciumcarbonat | 72,0 |

### Beispiel 3

| **Bestandteil** | **Menge [g]** |
|---|---|
| Trimethylolpropantriacrylat | 12,3 |
| Ethylenglycolmethacrylat | 12,3 |
| Trimethylolpropantriacetoacetat | 32,0 |
| Kaliumcarbonat | 3,4 |
| Calciumcarbonat | 72,5 |

### Vergleichsbeispiel 1

Als Vergleich diente ein auf wässriger Dispersionstechnologie basiertes kommerzielles Brandschutzprodukt (Hilti CFP SP-WB).

**Tabelle 1: Ergebnisse der Bestimmung der Aushärtungszeit, der Entzündung und der Flammenhöhe**

| | **Vergleichsbeispiel 1** | **Beispiel 1** | **Beispiel 2** | **Beispiel 3** |
|---|---|---|---|---|
| Aushärtungszeit | 24 h | < 1 h | < 1 h | < 1 h |
| Entzündung | ja | nein | nein | nein |
| Flammenhöhe | 150 mm | 86 mm | 65 mm | 62 mm |

## Patentansprüche

1. Ablativ wirkende Zusammensetzung, umfassend
- einen Bestandteil A, der einen multifunktionellen Michael-Akzeptor enthält, der mindestens zwei elektronenarme Kohlenstoffmehrfachbindungen pro Molekül als funktionelle Michael-Akzeptor-Gruppen aufweist,
- einen Bestandteil B, der einen multifunktionellen Michael-Donor enthält, der mindestens zwei C,H-saure Gruppen pro Molekül als funktionelle Michael-Donor-Gruppen aufweist,
- einen Bestandteil C, der eine Verbindung enthält, die eine X-H-Gruppe aufweist, wobei diese Verbindung mit dem Bestandteil A reagieren kann und wobei X für N, P, O, S oder C steht, mit der Maßgabe, dass wenn X für C steht, C Teil einer sauren Methylgruppe ist,
- einen Bestandteil D, der einen Katalysator für die Michael-Additionsreaktion enthält, und
- einen Bestandteil E, der mindestens ein ablativ wirkendes Brandschutzadditiv enthält.

2. Zusammensetzung nach Anspruch 1, wobei die funktionellen Michael-Akzeptor-Gruppen die Struktur (I) oder (II) aufweisen: 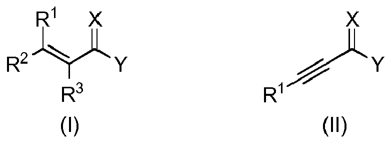 in denen
R¹, R² und R³ jeweils unabhängig voneinander Wasserstoff, eine lineare, verzweigte oder cyclische, gegebenenfalls substituierte Alkylgruppe, Arylgruppe, Aralkylgruppe oder Alkylarylgruppe darstellen, wobei diese unabhängig voneinander zusätzliche Ethergruppen, Carboxylgruppen, Carbonylgruppen, Thiol-analoge Gruppen, Stickstoff enthaltende Gruppen oder Kombinationen davon enthalten können; X O, S oder NR⁴ darstellt, worin R⁴ Wasserstoff oder jede der organischen Gruppen, wie sie für R¹, R² und R³ beschrieben sind, darstellt; Y OR⁵, SR⁵ oder NR⁵R⁶ darstellt, worin R⁵ und R⁶ Wasserstoff oder jede der organischen Gruppen, wie sie oben für R¹, R² und R³ beschrieben sind, darstellen.

3. Zusammensetzung nach Anspruch 2, wobei jede funktionelle Michael-Akzeptor-Gruppe über einen oder mehrere von R¹, R², R³, R⁴, R⁵ oder R⁶ an eine andere funktionelle Michael-Akzeptor-Gruppe, die gleich oder unterschiedlich sein kann, oder an ein Gerüst direkt angelagert ist.

4. Zusammensetzung nach Anspruch 3, wobei die funktionellen Michael-Akzeptor-Gruppen über R⁴, R⁵ oder R⁶ an eine Polyolverbindung, ein Oligomer oder Polymer gebunden sind.

5. Zusammensetzung nach einem der vorhergehenden Ansprüche, wobei die funktionellen Michael-Donor-Gruppen aus der Gruppe ausgewählt sind, bestehend aus β-Ketoestern, β-Ketoamiden, 1,3-Diketonen, Malonestern und Malonesterderivaten, Cyanoacetatestern, Cyanoacetamiden und α-Nitroalkanen.

6. Zusammensetzung nach Anspruch 4 oder 5, wobei die funktionellen Michael-Akzeptor-Gruppen oder die funktionellen Michael-Donor-Gruppen jeweils unabhängig an eine Polyolverbindung gebunden sind, die aus der Gruppe ausgewählt ist, bestehend aus Pentaerythritol, Neopentylglykol, Glycerol, Trimethylolpropan, Ethylenglykol und Polyethylenglykolen, Propylenglykolen und Polypropylenglykolen, Butandiol, Pentandiol, Hexandiol, Tricyclodecandimethylol, 2,2,4-Trimethyl-1,3-pentandiol, Bisphenol A, Cyclohexandimethanol, alkoxylierten und/oder propoxylierten Derivaten von Neopentylglykol und Tertraethylenglykol.

7. Zusammensetzung nach einem der vorhergehenden Ansprüche, wobei die X-H-Gruppe des Bestandteils C durch einen pKa (bestimmt in wässrigem Medium) gekennzeichnet ist, der mindestens eine ganzzahlige Einheit kleiner ist als der pKa der vorherrschenden C-H-Gruppen in dem Bestandteil B.

8. Zusammensetzung nach einem der vorhergehenden Ansprüche, wobei die X-H-Gruppen in dem Bestandteil C mit einem Anteil von mindestens 50 Mol-% enthalten sind, bezogen auf den Menge an Base, die durch den Bestandteil D freigesetzt wird.

9. Zusammensetzung nach einem der vorhergehenden Ansprüche, wobei die X-H-Gruppen in dem Bestandteil C mit einem Anteil von nicht mehr als 30 Mol-% enthalten sind, bezogen auf die C-H-sauren Gruppen des Bestandteils B.

10. Zusammensetzung nach einem der vorhergehenden Ansprüche, wobei neben dem Bestandteil C ein weiterer Bestandteil B2 enthalten ist, der eine Verbindung mit sauren Protonen (C-H) in einer aktivierten Methylen- oder Methin-Gruppe enthält, wobei die Verbindung verglichen mit dem Bestandteil B eine höhere Acidität hat und mit dem Bestandteil A reagieren kann.

11. Zusammensetzung nach Anspruch 10, wobei die C-H-Gruppen in dem Bestandteil B2 in einem Anteil zwischen 1 und 50 Mol-% enthalten sind, bezogen auf die gesamten C-H-Gruppen in dem Bestandteil B.

12. Zusammensetzung nach einem der vorhergehenden Ansprüche, wobei das reaktive Äquivalentverhältnis im Bereich von 0,1:1 bis 10:1 liegt.

13. Zusammensetzung nach einem der vorhergehenden Ansprüche, wobei das mindestens eine ablativ wirkende Brandschutzadditiv aus der Gruppe ausgewählt ist, bestehend aus LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂-6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AlOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₂)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon.

14. Zusammensetzung nach einem der vorhergehenden Ansprüche, wobei die Zusammensetzung ferner organische und/oder anorganische Zuschlagstoffe und/oder weitere Additive enthält.

15. Zusammensetzung nach einem der vorhergehenden Ansprüche, die als Zwei- oder Mehrkomponenten-System konfektioniert ist.

16. Zusammensetzung nach den Ansprüchen 13 und 15, wobei das dämmschichtbildende Additiv als Gesamtmischung oder in Einzelkomponenten aufgeteilt in einer Komponente oder mehreren Komponenten enthalten ist.

17. Verwendung der Zusammensetzung nach einem der Ansprüche 1 bis 16 als Beschichtung.

18. Verwendung nach Anspruch 17 für die Beschichtung von Konstruktionselementen.

19. Verwendung nach Anspruch 17 für die Beschichtung von nicht metallischen Bauteilen.

20. Verwendung nach einem der Ansprüche 17 bis 19 als Brandschutzschicht, insbesondere für einzelne Kabel, Kabelbündel, Kabeltrassen und Kabelkanäle oder anderen Leitungen oder Weichschotts.

21. Gehärtete Objekte, erhalten durch Härten der Zusammensetzung nach einem der Ansprüche 1 bis 16.
